# EUROPÄISCHE PATENTSCHRIFT

(11) **EP 1 697 016 B1**
(45) Veröffentlichungstag und Bekanntmachung des Hinweises auf die Patenterteilung: **10.01.2018**
(21) Anmeldenummer: 04803692.5
(22) Anmeldetag: 09.12.2004
(51) Int. Cl.: B01D 1/28, B01D 1/26

(54) **EINDAMPFVERFAHREN**
EVAPORATION PROCESS
PROCEDE D'EVAPORATION

(30) Priorität: 11.12.2003 DE 10358015
(43) Veröffentlichungstag der Anmeldung: 06.09.2006
(73) Patentinhaber: GEA Wiegand GmbH, 76275 Ettlingen (DE)
(72) Erfinder: PRASCHAK, Herbert, 99423 Weimar (DE)
(74) Vertreter: Weickmann & Weickmann PartmbB
(86) Internationale Anmeldenummer: PCT/EP2004/014038
(87) Internationale Veröffentlichungsnummer: WO 2005/056152

(56) Entgegenhaltungen:
- EP-A- 0 839 949
- DE-A1- 2 632 910
- DE-A1- 4 036 345
- GB-A- 127 807
- US-A- 4 437 316
- US-A- 5 098 518

## Beschreibung

Die Erfindung betrifft ein Verfahren zum Betreiben eine Eindampfanlage mit einem durch Prozessabdampf beheizten Verdampfer und einer durch Produkt-Brüden des Verdampfers beheizten Prozessstufe, insbesondere wenigstens einem weiteren Verdampfer.

Um Eindampfanlagen möglichst wirtschaftlich zu betreiben, wird zum Beheizen des oder der Verdampfer anderweitig anfallende Prozesswärme, beispielsweise in Form von im Prozess anfallenden Abdampfs genutzt. Solche Prozess-Abdämpfe, wie sie z.B. als Abdampf von Trocknerstufen anfallen, sind jedoch nur begrenzt verwendbar, da sie mit relativ niedrigem Druck anfallen oder aber mit Luft oder Inertgasen vermischt sind. Die Kondensationsfähigkeit der mit solchen Prozess-Abdämpfen beheizten Verdampfer ist in aller Regel vermindert und die Anzahl der mit solchen Prozess-Abdämpfen beheizten Verdampferstufen und damit die Effizienz der Eindampfanlage ist stark eingeschränkt.

Bei mehrstufigen Eindampfanlagen ist es weiterhin bekannt, den Produkt-Brüden einer Verdampferstufe der Eindampfanlage durch einen Kompressor auf einen höheren Druck zu verdichten, um so mit dem verdichteten Produkt-Brüden eine weitere Verdampferstufe zu heizen. Üblicherweise werden hierzu mit Frischdampf betriebene Strahlkompressoren oder mechanische Kompressoren benutzt. Werden mechanische Kompressoren eingesetzt, so liegen die üblichen Druckerhöhungen (Verhältnis Enddruck zu Saugdruck) für in der Praxis eingesetzte einstufige Radialventilatoren bei 1,3 und für einstufige Radialkompressoren bei 2,5. Da die Brüdentemperatur-Erhöhungen vergleichsweise klein sind, ist bei herkömmlichen, mehrstufigen Eindampfanlagen mit Brüdenkompression die Anzahl von in Reihe geschalteten Verdampferstufen stark begrenzt. Produkte mit hoher Siedepunktverschiebung lassen sich mit diesem Verfahren nicht oder nur unzureichend, d.h. im niedrigen Konzentrationsbereich, eindampfen.

Die DE 26 32 910 beschreibt ein Verfahren zum Eindampfen von Flüssigkeiten, insbesondere von radioaktiven Abwässern, mittels mehrstufiger Eindampfanlagen. Dabei wird die einzudampfende Flüssigkeit in einer oder mehreren der ersten Stufe folgenden Stufen der Eindampfanlage eingedampft und in Kombination damit das Brüden-Kondensat dieser Stufen zur Erzielung der erforderlichen Reinheit nochmals destilliert. Das Verfahren basiert auf einem niedrigen Wärmeleistungsaufwand und ist damit sehr wirtschaftlich durchführbar, und es kann gleichzeitig eine äußerst niedrige Restradioaktivität des endgültigen Destillats der Anlage erzielt werden.

Die US 4,437,316 beschreibt ein Verfahren und eine Vorrichtung zur Weiterverwendung von Abwärme in thermomechanischen Papierherstellungssystemen. Mittels zweier Verdampfereinheiten werden Druck und Temperatur des Produkt-Brüdens erhöht, und gibt in einem anschließenden Schritt seine Wärmeenergie in einem Verflüssiger an Wasser ab, welches schließlich zu Dampf konvertiert wird. Auf diese Weise produziert das Abwärme-Wiederverwertungssystem Dampf von hohem Druck und hoher Temperatur und im Vergleich zu dem die Abwärme bildenden Prozess-Abdampf auch Dampf, der frei von Verunreinigungen ist.

Es ist Aufgabe der Erfindung ein Verfahren zum Betreiben einer Eindampfanlage zu schaffen, die mit Prozess-Abdampf betrieben werden kann und eine verbesserte Eindampfleistung hat.

Die oben beschriebenen Probleme werden durch das Verfahren gemäß Anspruch 1 gelöst.

Die Erfindung geht aus von einer Eindampfanlage mit einer durch Prozess-Abdampf beheizten Verdampferstufe 1 und einer durch Produkt-Brüden dieser Stufe beheizten Prozessstufe, insbesondere wenigstens einem weiteren Verdampfer und ist dadurch gekennzeichnet, dass an den Produkt-Brüden-Ausgang des Verdampfers eine Brüden-Kompressionsstufe angeschlossen ist, die den Taupunkt des Verdampfers unter den für die Beheizung der Prozessstufe erforderlichen Temperatur-Wert absenkt und durch die Kompression des Produkt-Brüdens dessen Temperatur auf den für die Beheizung der Prozessstufe erforderlichen Temperaturwert anhebt.

Während bei herkömmlichen mehrstufigen Eindampfanlagen stets versucht wird, die Verdampfer der Eindampfanlage stets so zu betreiben, dass in jedem der Verdampfer der Energieinhalt des zum Heizen benutzten Abdampfs bzw. des Brüdens in Schritten nur soweit abgebaut wird, dass der Abdampf bzw. der Brüden sich noch auf einem in nachfolgenden Verdampfern nutzbaren Temperatur- und Energieniveau befindet, wird bei der erfindungsgemäßen Eindampfanlage der Taupunkt des ersten, durch den Prozess-Abdampf beheizten Verdampfers auf einen Wert abgesenkt, der unter der Heiztemperatur in dem nachfolgenden zweiten Verdampfer liegt. Auf diese Weise kann die Kondensationsleistung des ersten Verdampfers beträchtlich erhöht werden, selbst wenn zur Heizung des ersten Verdampfers nur Prozess-Abdampf mit niedrigem Druck zur Verfügung steht. Der in dem ersten Verdampfer abgekühlte Prozess-Abdampf wird in den weiteren Verdampfern der Eindampfanlage nicht mehr genutzt. Vielmehr wird durch die Brüden-Kompressionsstufe der im ersten Verdampfer entstehende Produkt-Brüden verdichtet und auf eine höhere Temperatur gebracht, so dass der Produkt-Brüden zum Heizen des zweiten Verdampfers und gegebenenfalls weiterer Verdampfer genutzt wird. Die Brüden-Kompressionsstufe ist so bemessen, dass sie zugleich für die Absenkung des Taupunkts des ersten Verdampfers sorgt.

Bei dem zum Erwärmen des ersten Verdampfers eingesetzten Prozess-Abdampf handelt es sich bevorzugt um gesättigten Prozessdampf bzw. Sattdampf. Vielfach steht jedoch der Prozess-Abdampf nicht in Form von Sattdampf zur Verfügung. In einer zweckmäßigen Ausgestaltung ist deshalb vorgesehen, dass der Sattdampf durch Wasserzufuhr aus überhitztem Prozess-Abdampf erzeugt wird und zwar vorzugsweise so, dass dieser Prozess kondensationsfrei abläuft. Geeignet zur kondensationsfreien Überführung des überhitzten Prozess-Abdampfs, beispielsweise eines Trockners in gesättigten Prozessdampf und zur Reinigung, ist insbesondere ein den überhitzten Prozess-Abdampf reinigender Nass-Wäscher. Für die Sättigung des überhitzten Prozess-Abdampfs kann dem Nass-Wäscher Frischwasser, aber auch in der Eindampfanlage anfallendes Kondensat zugeführt werden. Bei dem Nass-Wäscher kann es sich um einen Strahl-Nass-Wäscher handeln.

Wenngleich es sich bei der Kompressionsstufe auch um einen mit Frischdampf betriebenen Strahlkompressor handeln kann, so ist doch bevorzugt die Kompressionsstufe als mechanische Brüdenkompressionsstufe ausgebildet, um für die Brüdenkompression nicht zusätzlichen Frischdampf zur Verfügung stellen zu müssen. Bei der mechanischen Brüdenkompressionsstufe kann es sich um ein- oder mehrstufige Ventilatoren oder Kompressoren handeln.

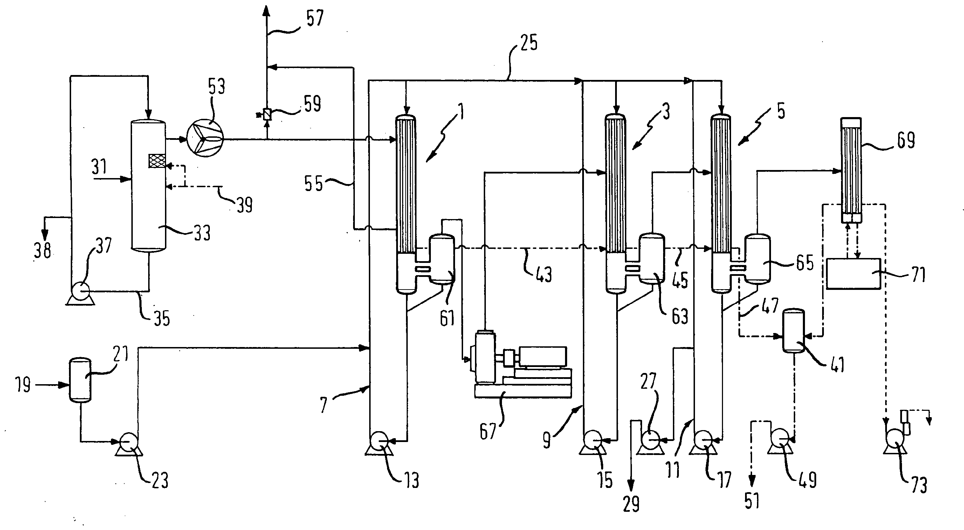

Im Folgenden wird die Erfindung anhand einer Zeichnung näher erläutert. Die Zeichnung zeigt ein schematisches Anlagenschema einer mehrstufigen Eindampfanlage, die mit überhitztem, mit Luft versetztem Trockner-Abdampf einer nicht näher dargestellten Trockneranlage beheizt werden kann.

Die Eindampfanlage umfasst drei jeweils als Fallstromverdampfer ausgebildete Verdampferstufen 1, 3, 5, von denen jede einen Produkt-Zirkulationskreis 7, 9 bzw. 11 mit einer Zirkulationspumpe 13, 15 bzw. 17 umfasst. Das bei 19 über einen Pufferbehälter 21 und eine Förderpumpe 23 zugeführte, einzudampfende Produkt wird in den Zirkulationskreislauf 7 der ersten Verdampferstufe 1 eingespeist und in üblicher Weise über den Zirkulationskreislauf 7 im oberen Bereich dem Verdampferraum der Verdampferstufe 1 zugeführt. In gleicher Weise gelangt das einzudampfende Produkt über eine Leitung 25 auch zu den Zirkulationskreisläufen 9, 11 der Verdampferstufen 3, 5. Mittels einer Förderpumpe 27 wird das eingedampfte Konzentrat an einem Auslass 29 abgeführt.

Die für die Beheizung der Verdampferstufen 1, 3 und 5 benötigte Heizenergie wird aus einer nicht näher dargestellten Trocknerstufe stammendes überhitztes Dampf-Luft-Gemisch verwendet, das bei 31 einem Strahl-Nass-Wäscher 33 zugeführt wird, der es in einem Zirkulationskreislauf 35, dessen Zirkulationspumpe bei 37 zu erkennen ist, von Staub und dergleichen befreit und zugleich den lufthaltigen, überhitzten Trockner-Abdampf in gesättigten Prozessdampf überführt. Der Abschlämmausgang des Wäschers 33 ist bei 38 angedeutet. Das erforderliche Mehr an Wasser wird bei 39 dem Strahl-Nass-Wäscher 33 zugeführt, insbesondere in Form von Kondensat, wie es über einen Entspannungsbehälter 41 und Leitungen 43, 45 und 47 in den Verdampfern 1, 3, 5 anfällt. Eine Förderpumpe 49 fördert das Kondensat zu einem Auslass 51.

Der gesättigte Prozessdampf wird über einen Ventilator 53 dem Heizraum des ersten Verdampfers 1 zugeführt und gelangt nach Verlassen des Heizraums über eine Leitung 55 zu einem Schornstein 57, der den abgekühlten Abdampf in die Atmosphäre entlässt. Überschüssiger Prozessdampf kann, gesteuert über ein Ventil 59, auch direkt dem Schornstein 57 zugeführt werden, um die Anlagenleistung zu regeln, beispielsweise um den Ausgangsdruck des Ventilators 53 konstant zu halten.

Jede der Verdampferstufen 1, 3 und 5 umfasst in ihrem unteren Teil einen Separator 61, 63 bzw. 65, der in dem Verdampfer frei werdenden Produkt-Brüden abtrennt. Der Produkt-Brüden der ersten Verdampferstufe 1 wird über einen mechanischen Kompressor 67 dem Heizraum der zweiten Verdampferstufe 3 zugeführt. Der Kompressor 67 ist so bemessen, dass er den Taupunkt im Verdampferraum des ersten Verdampfers 1 auf einen Temperaturwert absenkt, der unter dem für die Kondensation von Wasserdampf im zweiten Verdampfer 3 erforderlichen Wert der Taupunkttemperatur liegt. Der mechanische Kompressor 67 erhöht die Temperatur des Produkt-Brüdens auf die im zweiten Verdampfer 3 benötigte Heiztemperatur.

In den Verdampferstufen 3 und 5 wird der Eindampfprozess fortgesetzt, bis das Konzentrat mit der gewünschten Enddichte die Anlage über die Pumpe 27 am Auslass 29 verlässt.

Der restliche Produkt-Brüden der Verdampferstufe 5 wird in üblicher Weise einem Kondensator 69 zugeführt, dessen Kühlwasserversorgung bei 71 dargestellt ist. Im Kondensator 69 anfallendes Kondensat wird gleichfalls dem Sammelbehälter 41 zugeführt.

Bei 73 ist eine Vakuumpumpe dargestellt, die für den im Prozessbetrieb erforderlichen Unterdruck in den Verdampfern 1, 3, 5 sowie im Kondensator 69 sorgt.

Als Beispiel soll im Folgenden der Betrieb der Eindampfanlage beim Eindampfen von Na₂O-Lösung erläutert werden. Dem Eingang 31 des Strahl-Nass-Wäschers 33 wird auf 150°C überhitztes Dampf-Luft-Gemisch eines Trockners mit einer Taupunkttemperatur von 81 °C zugeführt. Das dann gesättigte Dampf-Luft-Gemisch wird in dem ersten Verdampfer 1 kondensiert, wobei der Kompressor 67 die Taupunkttemperatur des ersten Verdampfers 1 auf 65°C reduziert, um eine hinreichende Menge an Wasserdampf bereits in der ersten Verdampferstufe 1 kondensieren zu können. Da 65°C für die weitere Verdampfung in den Verdampferstufen 3 und 5 zu niedrig ist, erhöht der Kompressor 67 die Sattdampftemperatur für die Beheizung der Verdampferstufen 3 und 5 auf ca. 72°C. In den Verdampferstufen 3 und 5 beträgt die wirksame Temperaturdifferenz jeweils nur 2° bis 3°K, wobei der Druck im Kondensator 69 auf etwa 73 mbar eingestellt ist.

## Patentansprüche

1. Verfahren zum Betreiben einer Eindampfanlage mit einem durch Dampf beheizten Verdampfer (1) und einer durch Produkt-Brüden des Verdampfers beheizten Prozessstufe, insbesondere wenigstens einem weiteren Verdampfer (3, 5),
wobei an den Produkt-Brüden-Ausgang des Verdampfers (1) zum Zuführen des Produkt-Brüdens an die Prozessstufe eine Brüden-Kompressionsstufe (67) angeschlossen ist, die durch Kompression des Produkt-Brüdens dessen Temperatur auf den für die Beheizung der Prozessstufe (3, 5) erforderlichen Temperaturwert anhebt,
**dadurch gekennzeichnet, dass** die Brüden-Kompressionsstufe (67) den Taupunkt des Verdampfers (1) unter den für die Beheizung der Prozessstufe (3, 5) erforderlichen Temperatur-Wert absenkt und der Dampf zur Beheizung des Verdampfers (1) Prozess-Abdampf ist.

2. Verfahren zum Betreiben einer Eindampfanlage nach Anspruch 1,
**dadurch gekennzeichnet, dass** zur kondensationsfreien Überführung des überhitzten Prozess-Abdampf in gesättigten und gereinigten Prozessdampf ein den überhitzten Prozess-Abdampf reinigender Nass-Wäscher (33) vorgesehen wird.

3. Verfahren zum Betreiben einer Eindampfanlage nach Anspruch 2,
**dadurch gekennzeichnet, dass** an einer Stelle im Prozessdampfweg von einem Trockner über den Nass-Wäscher (33), dem Heizraum des Verdampfers (1), einer Abdampfleitung (55) und einem Abdampfschornstein (57) eine Förderpumpe (5) insbesondere in Form eines Ventilators angeordnet wird.

4. Verfahren zum Betreiben einer Eindampfanlage nach Anspruch 2 oder 3,
**dadurch gekennzeichnet, dass** dem Nass-Wäscher (33) für die Sättigung und Reinigung des überhitzten Prozess-Abdampfs Kondensat aus wenigstens einem der Verdampfer (1, 3, 5) zugeführt wird.

5. Verfahren zum Betreiben einer Eindampfanlage nach einem der Ansprüche 1 bis 4,
**dadurch gekennzeichnet, dass** die Kompressionsstufe (67) als mechanische Brüdenkompressionsstufe ausgebildet wird.

## Claims

1. Method for operating an evaporation plant comprising an evaporator (1), which is heated by steam, and a process stage, in particular at least one additional evaporator (3, 5), which is heated by product vapours from the evaporator,
a vapour compression stage (67) being connected to the product vapour outlet of the evaporator (1) in order to feed the product vapour to the process stage, which vapour compression stage increases the temperature of the product vapour to the temperature required for heating the process stage (3, 5) by compressing said product vapour,
**characterised in that** the vapour compression stage (67) lowers the dew point of the evaporator (1) to below the temperature required for heating the process stage (3, 5) and the steam for heating the evaporator (1) is exhaust process steam.

2. Method for operating an evaporation plant according to claim 1, **characterised in that** a wet scrubber (33), which cleans the overheated exhaust process steam, is provided for converting the overheated exhaust process steam into saturated and cleaned process steam in a condensation-free manner.

3. Method for operating an evaporation plant according to claim 2, **characterised in that** a feed pump (5), in particular in the form of a fan, is arranged at a point in the process steam path from a dryer via the wet scrubber (33) to the heating chamber of the evaporator (1), an exhaust steam line (55) and an exhaust steam chimney (57).

4. Method for operating an evaporation plant according to either claim 2 or claim 3,
**characterised in that** condensate from at least one of the evaporators (1, 3, 5) is fed to the wet scrubber (33) for saturating and cleaning the overheated exhaust process steam.

5. Method for operating an evaporation plant according to any of claims 1 to 4,
**characterised in that** the compression stage (67) is designed as a mechanical compression stage.

## Revendications

1. Procédé servant à faire fonctionner une installation d'évaporation comprenant un évaporateur (1) chauffé par de la vapeur et un étage de processus chauffé par des vapeurs de produit de l'évaporateur, en particulier au moins un autre évaporateur (3, 5),
dans lequel est raccordé à la sortie de vapeurs de produit de l'évaporateur (1) servant à amener à l'étage de processus les vapeurs de produit un étage de compression de vapeurs (67), qui élève, par la compression des vapeurs de produit, la température de ces dernières à la valeur de température nécessaire au chauffage de l'étage de processus (3, 5),
**caractérisé en ce que** l'étage de compression de vapeurs (67) abaisse le point de rosée de l'évaporateur (1) sous la valeur de température nécessaire au chauffage de l'étage de processus (3, 5), et la vapeur servant à chauffer l'évaporateur (1) est de la vapeur d'échappement de processus.

2. Procédé servant à faire fonctionner une installation d'évaporation selon la revendication 1,
**caractérisé en ce qu'**est prévu un laveur par voie humide (33) purifiant la vapeur d'échappement de processus surchauffée afin de transformer sans condensation la vapeur d'échappement de processus surchauffée en une vapeur de processus saturée et purifiée.

3. Procédé servant à faire fonctionner une installation d'évaporation selon la revendication 2, **caractérisé en ce qu'**une pompe de refoulement (5) se présentant en particulier sous la forme d'un ventilateur est disposée au niveau d'un emplacement sur le trajet de vapeur de processus depuis un sécheur en passant par le laveur par voie humide (33), l'espace de chauffage de l'évaporateur (1), un conduit pour vapeur d'échappement (55) et une cheminée pour vapeur d'échappement (57).

4. Procédé servant à faire fonctionner une installation d'évaporation selon la revendication 2 ou 3,
**caractérisé en ce que** du condensat issu d'au moins un des évaporateurs (1, 3, 5) est amené au laveur par voie humide (33) en vue de la saturation et de l'épuration de la vapeur d'échappement de processus surchauffée.

5. Procédé servant à faire fonctionner une installation d'évaporation selon l'une quelconque des revendications 1 à 4,
**caractérisé en ce que** l'étage de compression (67) est réalisé sous la forme d'un étage de compression de vapeurs mécanique.
